# EUROPEAN PATENT APPLICATION

(11) **EP 2 829 370 A1**
(43) Date of publication of application: **28.01.2015**
(21) Application number: 12871723.8
(22) Date of filing: 19.03.2012
(51) Int. Cl.: B25J 19/06, G05B 9/02, G05B 19/18, H02P 23/00

(54) **TASK ROBOT AND ROBOT SYSTEM**

(71) Applicant: Kabushiki Kaisha Yaskawa Denki, Kitakyushu-shi, Fukuoka 806-0004 (JP)
(72) Inventor: SAJIKAWA, Yuji, Kitakyushu-shi Fukuoka 806-0004 (JP); SHIRAKI, Tomoyuki, Kitakyushu-shi Fukuoka 806-0004 (JP); ICHIBANGASE, Atsushi, Kitakyushu-shi Fukuoka 806-0004 (JP); MATSUO, Tomohiro, Kitakyushu-shi Fukuoka 806-0004 (JP); ISHIKAWA, Shinichi, Kitakyushu-shi Fukuoka 806-0004 (JP); KAWANO, Tomoki, Kitakyushu-shi Fukuoka 806-0004 (JP)
(74) Representative: Grünecker, Kinkeldey, Stockmair & Schwanhäusser
(86) International application number: PCT/JP2012/057057
(87) International publication number: WO 2013/140514

(57) **Abstract**

Provided are a working robot and a robot system serving as a type coexisting with humans and capable of improving reliability in safety. The working robot includes a plurality of link members coupled rotatably around shafts, a motor driving the link members, and a controller switching a state of use of winding wires of the motor based on a result of sensing a moving object including a human in a predetermined area. The controller switches the state of use of the winding wires of the motor, to drive the link members in a first mode in which the number of revolutions or the torque of the motor is relatively large, when the moving object is not present; and switches the state of use of the winding wires of the motor, to drive the link members in a second mode in which the number of revolutions or the torque of the motor is relatively small, when the moving object is present.

## Description

### Field

The present invention relates to a working robot and a robot system.

### Background

In related art, working robots including a plurality of link members that are coupled rotatably around shafts and that work together with humans are known as robots of a type coexisting with humans. Working robots including such arms are required to avoid interference of the arms with another object including humans, and avoid damaging the other party even if the robots contact the other party.

Robots have been developed that include a controller configured to control operation of the arms to coexist with humans, without damaging humans even if the arms or the like contact the humans. In the robot, software of the controller controls operation of the arms, to cause the arms to perform an optimum contact operation with humans (for example, see Patent Literature 1).

### Citation List

### Patent Literature

Patent Literature 1: Japanese Patent Application Laid-open No. 2008-302496

### Summary

### Technical Problem

However, as working robots of a type coexisting with humans, it is desirable to achieve operation control with more improved reliability than that of operation control depending only on software as disclosed in above Patent Literature 1. In addition, working robots are required to perform work more efficiently.

An aspect of an embodiment has been made in consideration of the above. An object of the aspect is to provide a working robot and a robot system that coexist with humans and are capable of further enhancing reliability in safety.

### Solution to Problem

According to an aspect of an embodiment, a working robot includes: a plurality of link members coupled rotatably around shafts; a motor that drives the link members; and a controller that switches a state of use of winding wires of the motor, based on a result of sensing a moving object including a human in a predetermined area.

### Advantageous Effects of Invention

According to an aspect of an embodiment, it is possible to provide a working robot of a type coexisting with humans with higher reliability in safety.

### Brief Description of Drawings

FIG. 1 is an explanatory drawing illustrating a working area in which a robot system according to an embodiment is installed.
FIG. 2A is an explanatory drawing illustrating a turning area of an arm of a working robot in the robot system according to the embodiment.
FIG. 2B is an explanatory drawing illustrating a controller and the robot.
FIG. 3A is an explanatory drawing illustrating winding wires of a motor serving as a driving source of a working robot according to a first embodiment.
FIG. 3B is an explanatory drawing illustrating a state of use of the winding wires.
FIG. 3C is an explanatory drawing illustrating a state of use of the winding wires.
FIG. 4A is an explanatory drawing illustrating winding wires of a motor serving as a driving source of the working robot according to a second embodiment.
FIG. 4B is an explanatory drawing illustrating a state of use of the winding wires.
FIG. 4C is an explanatory drawing illustrating a state of use of the winding wires.
FIG. 5 is an explanatory drawing illustrating a first modification of winding wires of the motor.
FIG. 6 is an explanatory drawing illustrating a second modification of winding wires of the motor.

### Description of Embodiments

Embodiments of a working robot and a robot system disclosed by the present application will now be explained in detail with reference to attached drawings. The following embodiments do not limit the present invention.

### (First Embodiment)

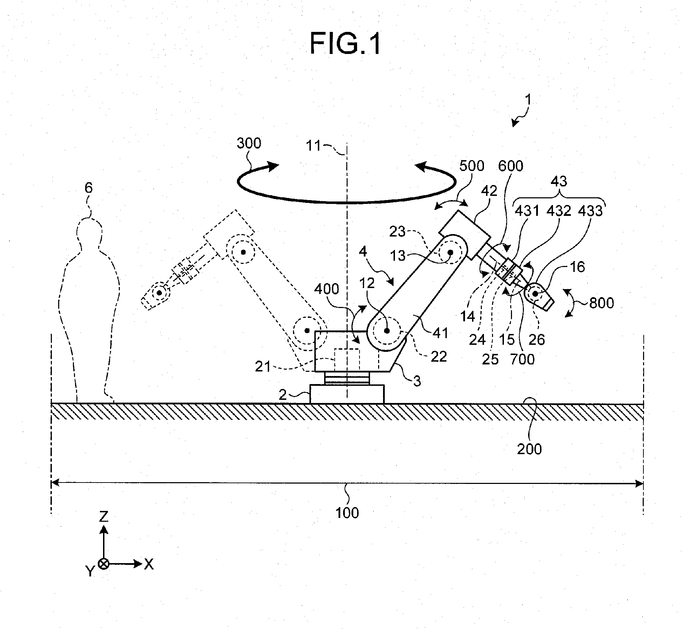

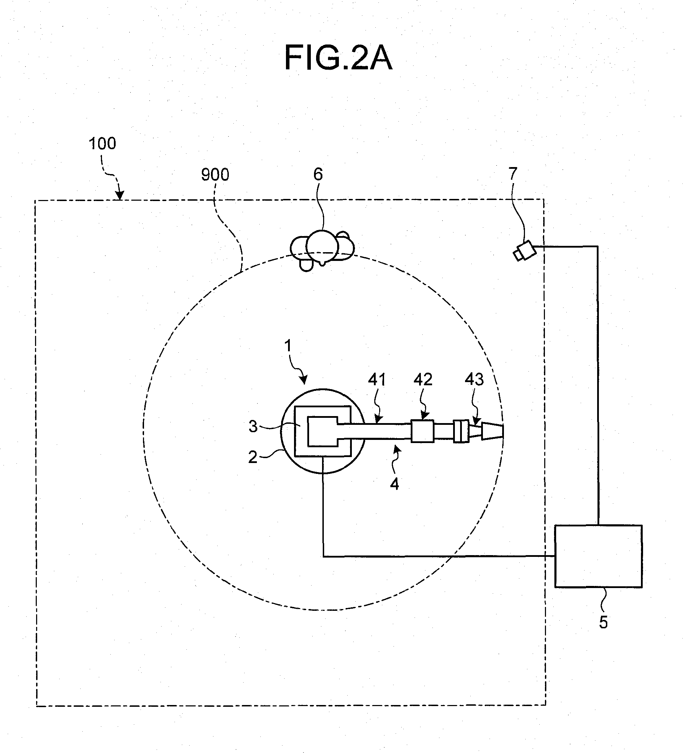

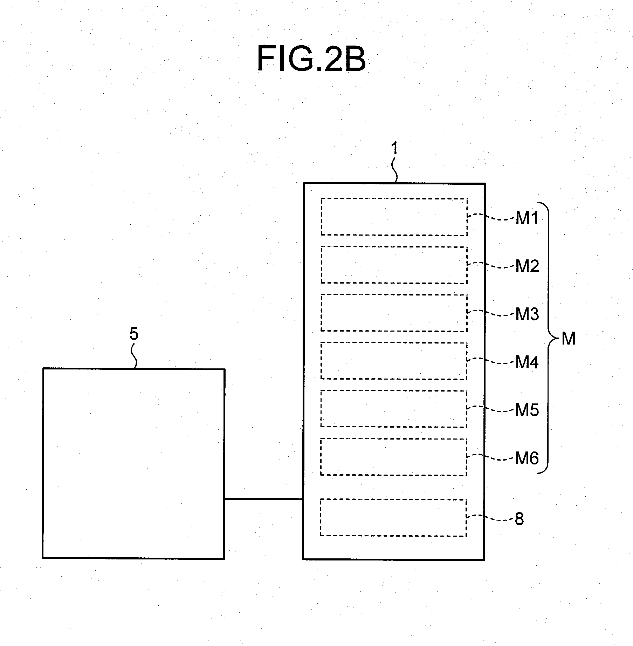

FIG. 1 is an explanatory drawing illustrating a working area 100 in which a robot system 10 including a working robot 1 according to a first embodiment is installed. FIG. 2A is an explanatory drawing illustrating a turning area of an arm part 4 of the working robot 1 in the robot system 10, and FIG. 2B is an explanatory drawing illustrating a controller and the robot.

Although the working robot 1 according to the present embodiment can be used in, for example, an automobile manufacturing line, the use and the details of the work of the robot are not specifically limited, but the robot can be used for various purposes and works.

As illustrated in FIG. 1, the robot system 10 according to the present embodiment is installed by placing the working robot 1 in a predetermined position in the working area 100 serving as a predetermined area. The position in which the working robot 1 is placed can be properly set according to the work. In this example, the working robot 1 is placed in an almost central position of the working area 100. In addition, the working area 100 is divided as, for example, a working booth (not illustrated) in an automobile manufacturing line.

As illustrated in FIG. 2A and FIG. 2B, the robot system 10 includes a controller 5 that controls operation of the working robot 1. The controller 5 stores contents of control commands for the working robot 1 in advance, and a motor M of the working robot 1 is controlled based on the stored contents. The controller 5 will be explained in detail later.

The working robot 1 includes a base 2 that is placed on a floor 200, a trunk part 3 that is turnably provided on the base 2, and an arm part 4 attached to the trunk part 3.

Specifically, the arm part 4 includes a first arm 41, a second arm 42, and a wrist part 43 that is formed of a first wrist part 431, a second wrist part 432, and a third wrist part 433. The first arm 41, the second arm 42, and the wrist part 43 are successively coupled via shafts. An end effector (not illustrated) suitable for the work assigned to the working robot 1 is attached to a distal end of the third wrist part 433. FIG. 2A illustrates a maximum turning locus 900 in a state where the arm part 4 of the working robot 1 having the above structure is extended to the maximum.

As described above, the working robot 1 according to the present embodiment is formed of an articulated robot including the trunk part 3, the first arm 41, the second arm 42, and the wrist part 43 as movable parts.

The trunk part 3 forming one of the movable parts is rotatably coupled, via a first joint part 21, with the almost cylindrical base 2 that is placed in a fixed state on the floor 200. The first joint part 21 is provided in almost the center of the base 2, and includes a first shaft 11 extending in a vertical direction (Z direction).

The first shaft 11 is connected and coupled with a first transmission mechanism (not illustrated) that includes a first motor M1 and a first reduction gear. Thereby, the trunk part 3 is rotated around the first shaft 11 in a horizontal direction by the first transmission mechanism, with respect to the base 2 fixed on the floor 200 (see an arrow 300). In the following explanation, horizontal rotation is also expressed as "turn".

A side part of the trunk part 3 is provided with a second joint part 22, and the first arm 41 is rotatably coupled via the second joint part 22.

The second joint part 22 includes a second shaft 12 extending in a direction perpendicular to the first shaft 11, specifically, a horizontal direction (Y direction) extending from front to rear on the drawing. The second shaft 12 is connected and coupled with a second transmission mechanism (not illustrated) including a second motor M2 and a second reduction gear. Thereby, the first arm 41 is rotated around the second shaft 12, that is, swung in a vertical direction (see an arrow 400), by the second transmission mechanism.

Because the first arm 41 is coupled in a position that is eccentric relative to the first shaft 11, the first arm 41, and the second arm 42 and the wrist part 43 that are successively coupled to the first arm 41 via shafts are turned around the first shaft 11.

A distal end of the first arm 41 that is longest in the movable parts is provided with a third joint part 23, and the second arm 42 having an almost L shape is coupled via the third joint part 23.

The third joint part 23 includes a third shaft 13 extending in a direction parallel with the second shaft 12, that is, in the same direction as that of the second shaft 12 perpendicular to the first shaft 11. The third shaft 13 is connected and coupled with a third transmission mechanism (not illustrated) including a third motor M3 and a third reduction gear. Thereby, the second arm 42 is rotated around the third shaft 13, that is, swung in a vertical direction (see an arrow 500), by the third transmission mechanism.

A distal end of the second arm 42 is provided with a fourth joint part 24, and the first wrist part 431 is coupled via the fourth joint part 24.

The wrist part 43 is formed of the cylindrical first wrist part 431 coupled to the fourth joint part 24, the second wrist part 432 coupled to the first wrist part 431, and the third wrist part 433 provided with an end effector.

The fourth joint part 24 that is connected and coupled with the first wrist part 431 includes a fourth shaft 14 extending in a direction perpendicular to the third shaft 13, that is, in a horizontal direction (X direction) extending from right to left on the drawing. The fourth shaft 14 is connected and coupled with a fourth transmission mechanism (not illustrated) including a fourth motor M4 and a fourth reduction gear. Thereby, the first wrist part 431 that is coaxially connected and coupled with the fourth shaft 14 is rotated around the fourth shaft 14 by the fourth transmission mechanism, that is, rotates on its own axis around the fourth shaft 14 (see an arrow 600).

A distal end of the first wrist part 431 is provided with a fifth joint part 25, and the second wrist part 432 is coaxially coupled via the fifth joint part 25.

The fifth joint part 25 includes a fifth shaft 15 extending in a coaxial direction with the fourth shaft 14, that is, in the horizontal direction (X direction) extending from right to left on the drawing. The fifth shaft 15 is connected and coupled with a fifth transmission mechanism (not illustrated) including a fifth motor M5 and a fifth reduction gear. Thereby, the second wrist part 432 that is coaxially connected and coupled with the fifth shaft 15 is rotated around the fifth shaft 15 by the fifth transmission mechanism, that is, rotates on its own axis around the fifth shaft 15 (see an arrow 700).

A distal end of the second wrist part 432 is provided with a sixth joint part 26, and the third wrist part 433 is coupled via the sixth joint part 26.

The sixth joint part 26 includes a sixth shaft 16 extending in a direction perpendicular to the fifth shaft 15, that is, in the horizontal direction (Y direction) extending from front to rear on the drawing. The sixth shaft 16 is connected and coupled with a sixth transmission mechanism (not illustrated) including a sixth motor M6 and a sixth reduction gear. Thereby, the third wrist part 433 is rotated around the sixth shaft 16, that is, swung in a vertical direction (see an arrow 800), by the sixth transmission mechanism.

As described above, the working robot 1 according to the present embodiment includes the trunk part 3 that is provided rotatably around the first shaft 11 with respect to the base 2 provided on the floor 200 serving as the predetermined placing surface, and the arm part 4 that is rotatably provided with respect to the trunk part 3.

The arm part 4 includes the first arm 41 that is provided rotatably around the second shaft 12 with respect to the trunk part 3, the second arm 42 that is provided rotatably around the third shaft 13 with respect to the first arm 41, and the wrist part 43 that is rotatably provided with respect to the second arm 42.

The wrist part 43 includes the first wrist part 431, the second wrist part 432, and the third wrist part 433. The first wrist part 431 is provided rotatably around the fourth shaft 14 with respect to the second arm 42. The second wrist part 432 is provided rotatably around the fifth shaft 15 with respect to the first wrist part 431. The third wrist part 433 is provided rotatably around the sixth shaft 16 with respect to the second wrist part 432, and has a distal end provided with a predetermined end effector.

The trunk part 3, the first arm 41, the second arm 42, the first wrist part 431, the second wrist part 432, and the third wrist part 433 are a plurality of link members that are coupled rotatably around shafts, and form the movable parts of the working robot 1.

Specifically, the working robot 1 according to the present embodiment includes a plurality of link members (the trunk part 3, the first arm 41, the second arm 42, the first wrist part 431, the second wrist part 432, and the third wrist part 433) that are coupled rotatably around shafts, and motors M (the first motor M1, the second motor M2, the third motor M3, the fourth motor M4, the fifth motor M5, and the sixth motor M6) that drive the link members, as illustrated in FIG. 2A. In addition, the working robot 1 has a structure of including a contactor 8 serving as a switching device that switches the energized states of a plurality of types of energization circuits included in each motor M, as illustrated in FIG. 2A.

The controller 5 included in the robot system 10 is connected with the working robot 1 as illustrated in FIG. 2A and FIG. 2B, and includes a central processing unit (CPU), a read-only memory (ROM), a random access memory (RAM), and a storage unit such as a hard disk, which are not illustrated. In the controller 5, the CPU reads a program stored in the storage unit, to drive the trunk part 3, the first arm 41, the second arm 42, the first wrist part 431, the second wrist part 432, and the third wrist part 433 serving as the link members, in accordance with the program.

As illustrated, the controller 5 is also electrically connected with a moving-object detecting unit 7 that is disposed in the working area 100 independently of the working robot 1. The moving-object detecting unit 7 is formed of a proximity sensor that senses a moving object 6 including a human in the working area 100. Although the moving-object detecting unit 7 in the present embodiment is disposed in the working area 100, the moving-object detecting unit 7 may be disposed outside the working area 100, as long as it can sense the moving object 6 in the working area 100.

The controller 5 receives a sensing result obtained by the moving-object detecting unit 7, and for example, reduces the torque of the motor M that drives the arm part 4 or reduces the speed of the turning operation of the arm part 4 based on the received sensing result.

Specifically, when information indicating a sensing result from the moving-object detecting unit 7 is transmitted to the controller 5 and stored in the storage unit, the CPU transmits a drive control signal to each motor M by interruption processing, based on the stored information. Specifically, for example, the CPU executes drive control, such as reducing the torque of the motor M driving the arm part 4, and reducing the speed of the turning operation of the arm part 4, by interruption processing.

As described above, the working robot 1 and the robot system 10 including the working robot 1 having the above structure according to the present embodiment are aimed at further improving the reliability such as safety, to become more suitable for the type co-existing with humans.

Specific control processing performed by the controller 5 according to the present embodiment is processing of switching the state of use of winding wires of the motor M, based on the sensing result obtained by the moving-object detecting unit 7 for the moving object 6 in the working area 100. The motor M serving as a specific object to be controlled is necessary motor M among the first to sixth motors M1 to M6 in the first to sixth transmission mechanisms that rotate the link members around the shafts.

Specifically, when the moving object 6 such as a human is not present in the working area 100, the controller 5 switches the state of use of the winding wires of the motor, and drives the link member in a first mode in which the number of revolutions or the torque of the motor is relatively large. On the other hand, whey the moving object 6 is present in the working area 100, the controller 5 switches the state of use of the winding wires of the motor, and drives the link member in a second mode in which the number of revolutions or the torque of the motor is relatively small. In the explanation, the link members indicate the trunk part 3, the first arm 41, the second arm 42, the first wrist part 431, the second wrist part 432, and the third wrist part 433, as described above.

The moving-object detecting unit 7 is not limited to a proximity sensor used in the present embodiment, but any device may be used as long as it can achieve the object. For example, a camera may be suitably used.

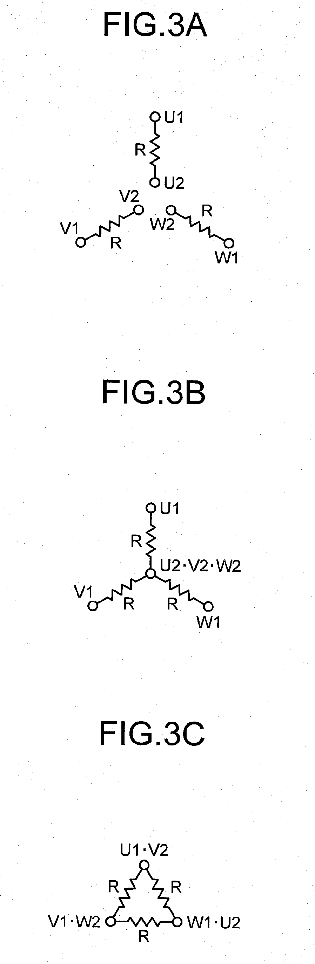

The following is explanation of switching of the state of use of the winding wires of the motor M according to the first embodiment, with reference to FIG. 3A to FIG. 3C.

FIG. 3A is an explanatory drawing illustrating winding wires R of the motor serving as the driving source of the working robot 1 according to the first embodiment, and FIG. 3B and FIG. 3C are explanatory drawings illustrating states of use of the winding wires R.

In the example, the state of use of the winding wires R is switched by switching the connection form of the winding wires R. Specifically, the connection form of the winding wires R is switched between star connection (Y connection) and delta connection (Δ connection). In the present embodiment, the contactor 8 is used as an example of the switching device. Specifically, the connection form is changed by mechanically switching the contact of the contactor 8 serving as the switching device, with a command from the controller 5 to change a physical energization circuit.

Because the connection form of the winding wires R is switchable as described above, an U1-U2 winding wire R, a V1-V2 winding wire R, and a W1-W2 winding wire R, which are independent, are prepared as illustrated in FIG. 3A. Then, star connection and delta connection can be mutually switchable using the contactor 8. In the star connection, U2, V2, and W2 are connected to each other as a neutral point, as illustrated in FIG. 3B. In the delta connection, U1 of the U1-U2 winding wire R is connected with V2 of the V1-V2 winding wire R, V1 of the V1-V2 winding wire R is connected with W2 of the W1-W2 winding wire R, and W1 of the W1-W2 winding wire R is connected with U2 of the U1-U2 winding wire R, as illustrated in FIG. 3C.

It is known that the delta connection illustrated in FIG. 3C has a torque √3 times as large as the torque of the star connection illustrated in FIG. 3B. Specifically, in this example, the delta connection illustrated in FIG. 3C serves as the state of use of the winding wires in the first mode, and the star connection illustrated in FIG. 3B serves as the state of use of the winding wires in the second mode.

Thus, when the moving object 6 is not present in the working area 100, the controller 5 switches the connection form of the winding wires R of the motor M to the delta connection, because there is no fear that the arm part 4 or the like may contact the moving object 6. Specifically, the controller 5 drives the link member in the first mode in which the torque of the motor M is relatively large, and in this case it is possible to cause the working robot 1 to perform hard work that incurs relatively large load.

On the other hand, when the moving robot 6 is present in the working area 100, the controller 5 switches the connection form of the winding wires R of the motor M to the star connection, to prevent large damage even when the arm part 4 contacts the moving object 6. Specifically, the controller 5 drives the link member in the second mode in which the torque of the motor M is relatively small. In this case, it is possible to cause the working robot 1 to perform soft work with relatively small load.

In addition, the turning speed or the swing speed of the arm part 4 may influence the working efficiency, according to the work. In such a case, when the moving object 6 is not present in the working area 100, the controller 5 drives the link member in the first mode in which the number of revolutions of the motor M is relatively large, and causes the working robot 1 to perform work at relatively high speed, because there is no fear that the arm part 4 or the like contacts the moving object 6. Because the magnitude of the torque has inverse relation to the magnitude of the number of revolutions, the connection form of the winding wires R of the motor M is switched to the star connection, in the first mode in the above case.

On the other hand, when the moving object 6 is present in the working area 100, the controller 5 drives the link member in the second mode in which the number of revolutions of the motor M is relatively small, to prevent large damage even when the arm part 4 or the like contacts the moving object 6. Specifically, the controller 5 causes the working robot 1 to perform work at relatively low speed. In the second mode in such a case, the connection form of the winding wires R of the motor M is switched to the delta connection.

### (Second Embodiment)

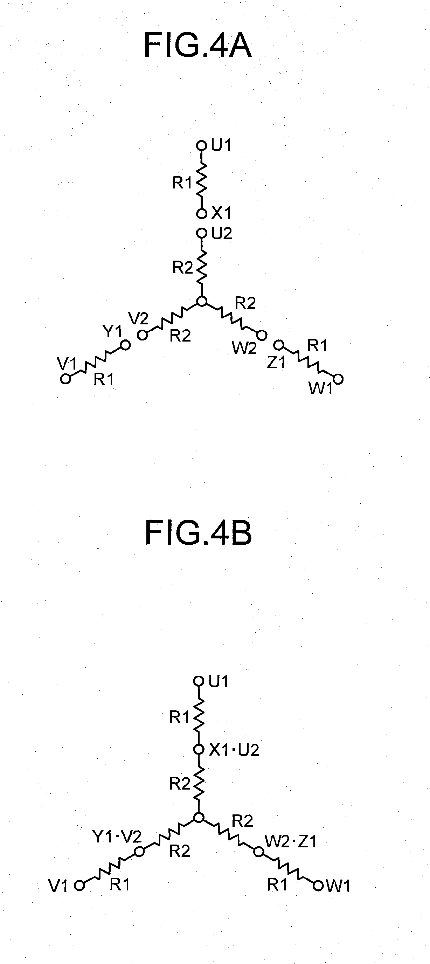

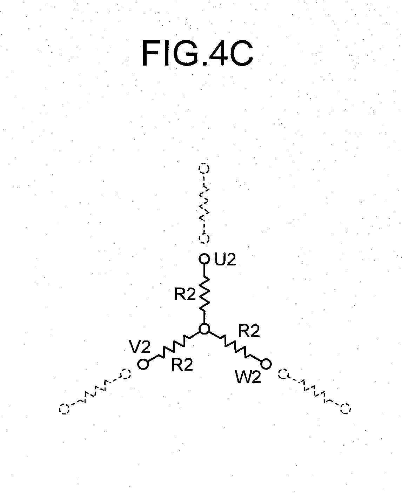

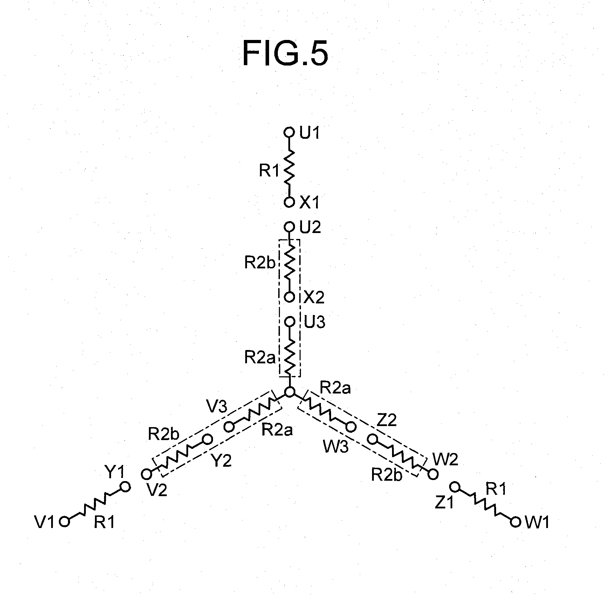

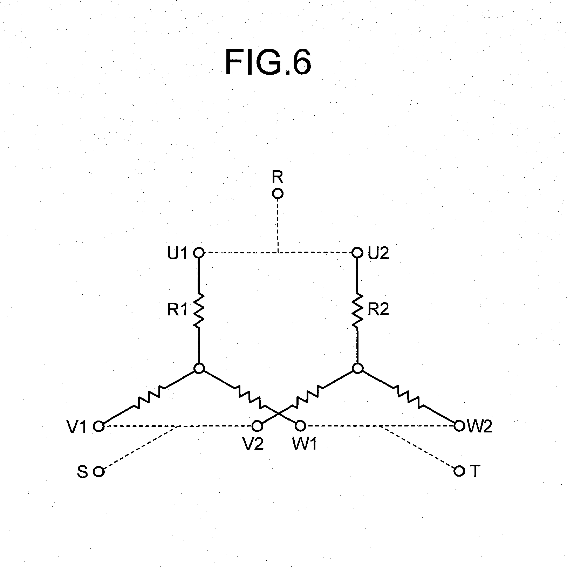

The following is explanation of switching of the state of use of winding wires of the motor M according to the second embodiment, with reference to FIG. 4A to FIG. 6. FIG. 4A is an explanatory drawing illustrating winding wires R of the motor M serving as the driving source of the working robot 1 according to the second embodiment. FIG. 4B and FIG. 4C are explanatory drawings illustrating states of use of the winding wires R. FIG. 5 and FIG. 6 are explanatory drawings illustrating modifications of the winding wires R of the motor M.

The controller 5 in the working robot 1 according to the second embodiment switches the state of use of the winding wires R by switching the number of turns of the winding wires R to be used. Specifically, the physical energization circuit is changed by changing the number of turns of the winding wires R using the contactor 8.

To make the connection form of the winding wires R switchable, a U1-X1 winding wire R1, a V1-Y1 winding wire R1, and a W1-Z1 winding wire R1, which are independent, and a U2, V2, W2 winding wire R2 formed of star connection are prepared as illustrated in FIG. 4A. Thereby, the state of use is switchable between a first mode (FIG. 4B) including the winding wires R1 and R2, in which X1 is connected with U2, Y1 is connected with V2, and Z1 is connected with W2 to increase the number of turns, and a second mode (FIG. 4C) including only the winding wire R2 with the smaller number of turns, using the contactor 8. In this case, the rated torque and the rated number of revolutions of the motor M can be changed, because the number of turns of the winding wires R differs, although the motor M includes the same star connection.

With the above structure, for example, when the moving object 6 is not present in the working area 100, the controller 5 performs switching to increase the number of turns of the winding wires of the motor M, because there is no fear that the arm part 4 or the like may contact the moving object 6. Specifically, it is possible to drive the link member in the first mode in which the torque and the number of revolutions of the motor M are set relatively large. In this case, it is possible to cause the working robot 1 to perform hard work or high-speed work that incurs relatively large load.

On the other hand, when the moving object 6 is present in the working area 100, the controller 5 performs switching to reduce the number of turns of the winding wires R of the motor M, to prevent large damage even when the arm part 4 contacts the moving object 6. Specifically, it is possible to drive the link member in the second mode in which the torque and the number of revolutions of the motor M are set relatively small. In this case, it is possible to cause the working robot 1 to perform soft work or low-speed work with relatively small load.

In the example illustrated in FIG. 4A to FIG. 4C, because the winding wires R includes only two types, that is, the winding wires R1 and R2, the maximum number of turns is obtained in the case of using the winding wires R1 and R2.

However, as a first modification, three or more winding wires may be used. The first modification enables the controller 5 to set the number of turns of the winding wires to be used to the maximum in the first mode, and set the number of turns of the winding wires to be used to a plurality of levels by switching in the second mode.

For example, as illustrated in FIG. 5, winding wires R1 and winding wires R2b, which are independent, and a winding wire R2b that is star-connected in advance are prepared. The independent winding wires R1 and R2b are a U1-X1 winding wire R1 and a U2-X2 winding wire R2b, a V1-Y1 winding wire R1 and a V2-Y2 winding wire R2b, and a W1-Z1 winding wire R1 and a W2-Z2 winding wire R2b. The star-connected winding wire R3 is a U3, V3, W3 winding wire R3.

When the moving object 6 is not present in the working area 100, the controller 5 connects X1 to U2 and X2 to U3, Y1 to V2 and Y2 to V3, and Z1 to W2 and Z2 to W3, using the contactor 8, to obtain the first mode with the maximum number of turns. In this state, the winding wires R1, the winding wire R2a, and the winding wires R2b are in the used state.

On the other hand, when the moving object 6 is present in the working area 100, the controller 5 performs control to reduce the number of turns of the winding wires to be used. In this operation, for example, the controller 5 cuts off connections between X2 and U3, Y2 and V3, and Z2 and W3, to switch the mode to the second mode including only the winding wire R2a, or cuts off only connections between X1 and U2, Y1 and V2, and Z1 and W2, to switch the mode to the second mode including the winding wires R2a and R2b.

As described above, in the second mode, the number of turns of the winding wires to be used can be set to a plurality of levels by switching. With the above structure, the number of revolutions and the torque of the motor M can be changed according to the position of the moving object 6 in the working area 100, or according to whether the moving object 6 is a human or any device.

For example, first, the controller 5 determines how the position of the moving object 6 in the working area 100 is distant from the maximum turning locus 900 of the arm part 4 of the working robot 1, based on a sensing result obtained by the moving-object detecting unit 7. Then, the controller 5 switches the state of use of the winding wires of the motor M according to the distance. Specifically, it is possible to reduce the number of revolutions or the torque of the motor M in a stepped manner even in the same second mode, according to the distance between the moving object 6 and the working robot 1.

As another example, the degree of reduction in the number of revolutions or the torque of the motor M is set variable, according to whether the moving object 6 that is present in the working area 100 is a human, even when the moving object 6 is present in the working area 100 as a sensing result obtained by the moving-object detecting unit 7.

In the case of determining whether the moving object 6 is a human, a camera should be used as the moving-object detecting unit 7, instead of a proximity sensor, to perform processing to detect a human body from an image detected by the camera.

FIG. 6 is an explanatory drawing illustrating a second modification of the winding wires of the motor M of the working robot 1 according to the present embodiment. Although the winding wires R1 and the winding wires R2 are connectable in series in the examples illustrated in FIG. 4A and FIG. 5, the second modification illustrated in FIG. 6 has the structure in which a winding wire R1 and a winding wire R2 are arranged in parallel and have numbers of turns that are different from each other. The number of turns can be changed by using only the winding wire R1 or the winding wire R2, or using the winding wire R1 and the winding wire R2. Three or more winding wires may be arranged in parallel.

Each switching of the state of use of the winding wires in the motor M according to the second embodiment described above is performed by switching the number of turns of the winding wires to be used, under star connection. However, the switching may not be performed simply by switching the number of turns of the winding wires, but may be performed in combination with the system for switching the state of use of the winding wires R explained in the first embodiment, that is, the technique of switching the connection form between the star connection and the delta connection.

In the meantime, in the embodiments described above, the first motor M1 included in the first transmission mechanism of the first joint part 21 (see FIG. 1) that couples the base 2 with the trunk part 3 serves as the motor M to be controlled by the controller 5 in accordance with a sensing result obtained by the moving-object detecting unit 7.

This is because the load on the first motor M1 that turns the trunk part 3 supporting the arm part 4 is relatively large, and the whole arm part 4, at which the working robot 1 interferes with the moving object 6, is turned together with turn of the trunk part 3.

However, the motor to be controlled is not always limited to the first motor M1, but any appropriate motor M can be controlled. In addition, it is also possible to simultaneously switch the states of use of the winding wires of the motors M1 to M6 in the first to sixth transmission mechanisms (not illustrated) that rotate the respective link members around the shafts, and necessary motors M among all the motors M may be controlled in proper combination.

The number of turns of the winding wires does not change before and after switching of the state of use in the motor M explained in the first embodiment, in which the state of use of the winding wires is switched by switching the connection form of the winding wires. Thus, the motor M of the first embodiment has a compact structure.

Thus, for example, it is possible to adopt the motor M of the first embodiment as the third to sixth motors M3 to M6 that are considered to incur relatively small motor load, and adopt the motor M of the winding wires explained in the second embodiment as the first motor M1 and the second motor M2 that are considered to incur relatively large motor load.

The working robot 1 according to the embodiments described above mechanically switches the state of use of the winding wires of the motor M. This structure improves the reliability of operation of the working robot 1 in comparison with operation control depending on only software, and enables achievement of a working robot and a robot system that are more suitable for the type coexisting with humans.

The present invention includes any structures other than those of the above embodiments, as long as the structure mechanically switches the winding wires of the motor M. For example, one field may be provided with a plurality of armatures, and the number of armatures to be used among the armatures may be variable.

In addition, although the moving-object detecting unit 7 is disposed in the working area 100 independently of the working robot 1 in the above embodiments, the moving-object detecting unit 7 may be provided as one unitary piece with the working robot 1.

The skilled person can easily reach further effects and other modifications. Thus, broader aspects of the present invention are not limited to the specific details or the representative embodiments disclosed and described above. Therefore, various changes are possible without departing from the spirit or scope of the general concept of the invention defined by the attached claims and equivalents thereof.

### Reference Signs List

1 Working robot
4 Arm part
5 Controller
6 Moving object
7 Moving-object detecting unit
8 Contactor (switching device)
100 Working area (predetermined area)
M Motor
R, R1, R2 Winding wire

## Claims

1. A working robot comprising:
a plurality of link members coupled rotatably around shafts;
a motor that drives the link members; and
a controller that switches a state of use of winding wires of the motor, based on a result of sensing a moving object including a human in a predetermined area.

2. The working robot according to claim 1, wherein
the controller:
switches the state of use of the winding wires of the motor, to drive the link members in a first mode in which number of revolutions or torque of the motor is relatively large, when the moving object is not present; and
switches the state of use of the winding wires of the motor, to drive the link members in a second mode in which the number of revolutions or the torque of the motor is relatively small, when the moving object is present.

3. The working robot according to claim 1 or 2, wherein the controller switches the state of use of the winding wires by switching a connection form of the winding wires.

4. The working robot according to claim 1 or 2, wherein the controller switches the state of use of the winding wires by switching number of turns of winding wires to be used.

5. The working robot according to claim 4, wherein
the controller:
sets the number of turns of the winding wires to be used to maximum in the first mode; and
is capable of setting the number of turns of the winding wires to be used to a plurality of levels by switching in the second mode.

6. The working robot according to any one of claims 1 to 5, further comprising:
a moving-object detecting unit that senses the moving object including a human in the predetermined area, and outputs a sensing result to the controller.

7. A robot system comprising:
the working robot according to any one of claims 1 to 5 disposed in a predetermined area; and
a moving-object detecting unit disposed independently of the working robot, the moving-object detecting unit sensing a moving object including a human in the predetermined area, and outputting a sensing result to a controller.

8. A working robot comprising:
a plurality of link members coupled rotatably around shafts; and
a motor driving the link members,
the motor including:
a plurality of types of energization circuits each of which generates a driving force by energization; and
a switching device that switches energized states of the plurality of types of energization circuits.
